# EUROPÄISCHE PATENTANMELDUNG

(11) **EP 4 159 618 A1**
(43) Veröffentlichungstag der Anmeldung: **05.04.2023**
(21) Anmeldenummer: 21200477.4
(22) Anmeldetag: 01.10.2021
(51) Int. Cl.: B64C 27/08, B64C 27/20, B64C 39/00, B64C 39/02, G08B 17/00

(54) **BETRIEBSVERFAHREN FÜR EIN ELEKTRISCHES SYSTEM**

(71) Anmelder: Siemens Aktiengesellschaft, 80333 München (DE)
(72) Erfinder: Bischoff, Martin, 85653 Aying, Großhelfendorf (DE); Stegmeier, Stefan, 81825 München (DE); Freudenberg, Oliver, 83547 Babensham (DE); Röhrl, Verena, 81241 München (DE)
(74) Vertreter: Siemens Patent Attorneys

(57) **Zusammenfassung**

Es wird ein Verfahren zum Betrieb eines Systems (1) angegeben,
- wobei das System (1) wenigstens ein elektrisches Gerät (300), wenigstens eine Basisstation (200) und wenigstens eine Flugdrohne (100) umfasst,
- wobei das elektrische Gerät (300) einen Geräte-Akkumulator (320) aufweist,
- wobei die Flugdrohne (100) einen Drohnen-Akkumulator (120) aufweist,
- wobei die Basisstation (200) eine Ladevorrichtung (230) aufweist
- und wobei das Verfahren die folgenden Schritte umfasst:
a) Laden des Drohnen-Akkumulators (120) mit der Ladevorrichtung der Basisstation (200),
b) Anfliegen des elektrischen Geräts (300) mit der Flugdrohne (100),
c) Laden des Geräte-Akkumulators (320) mit elektrischer Energie aus dem Drohnen-Akkumulator (120) der Flugdrohne und
d) Anfliegen der Basisstation (200) mit der Flugdrohne (100). Weiterhin wird ein System (1) angegeben, welches dazu ausgelegt ist, mit einem solchen Verfahren betrieben zu werden.

## Beschreibung

Die vorliegende Erfindung betrifft ein Verfahren zum Betrieb eines Systems, wobei das System wenigstens ein elektrisches Gerät mit einem Geräte-Akkumulator umfasst. Dabei ist das elektrische Gerät insbesondere ein Gerät mit einem vergleichsweise geringen Energiebedarf. Außerdem betrifft die Erfindung ein System, das dazu ausgelegt ist, mit dem beschriebenen Verfahren betrieben zu werden.

Aus dem Stand der Technik sind viele elektrische Systeme bekannt, welche ein oder mehrere akkubetriebene elektrische Geräte mit vergleichsweise geringem Energiebedarf aufweisen. Beispielsweise werden akkubetriebene Rauchmelder in Gebäuden installiert oder andere kabellose Sensoren werden in industriellen Fertigungsanlagen zu Überwachungszwecken eingesetzt. Ziel bei solchen Systemen ist es häufig, die betreffenden ackubetriebenen Geräte über einen längeren Zeitraum wie beispielsweise mehrere Jahre stabil betreiben zu können, ohne dass sie zwischendurch über ein Kabel mit dem Stromnetz verbunden werden müssen. Um dies zu gewährleisten, muss das ackubetriebene elektrische Gerät entweder einen ausreichend dimensionierten Geräte-Akkumulator aufweisen oder der Geräte-Akkumulator muss während der Betriebsdauer des Geräts nachgeladen werden. Ein solches Nachladen von Geräten mit relativ geringem Batteriebedarf kann insbesondere auch durch lokales Energy Harvesting erreicht werden - also durch die Gewinnung kleiner elektrischer Energiemengen aus lokalen Quellen wie z.B. der Umgebungstemperatur, Vibrationen oder Luftströmungen. Dies führt jedoch zu einer relativ hohen Komplexität des Systems, da ein zusätzlicher Miniaturgenerator für die elektrische Energie vorgesehen werden muss. Alternativ können die Geräte-Akkumulatoren auch bei einem niedrigen Ladezustand durch einen menschlichen Benutzer ersetzt oder nachgeladen werden. Dies führt jedoch zu einem unerwünschten Wartungsaufwand.

Aufgabe der Erfindung ist es daher, ein Betriebsverfahren für ein System mit wenigstens einem akkubetriebenen elektrischen Gerät anzugeben, welches die genannten Nachteile überwindet. Insbesondere soll ein Betriebsverfahren zur Verfügung gestellt werden, welches einen stabilen Betrieb des akkubetriebenen elektrischen Geräts über eine möglichst lange Betriebsdauer mit vergleichsweise geringem Aufwand ermöglicht. Eine weitere Aufgabe ist es, ein System anzugeben, welches für den Betrieb mit einem solchen Verfahren ausgelegt ist. Diese Aufgaben werden durch das in Anspruch 1 beschriebene Verfahren und das in Anspruch 15 beschriebene System gelöst.

Das erfindungsgemäße Verfahren ist ein Betriebsverfahren für ein System. Dieses System umfasst wenigstens ein elektrisches Gerät, wenigstens eine Basisstation und wenigstens eine Flugdrohne. Das elektrische Gerät weist einen Geräte-Akkumulator auf, die Flugdrohne weist einen Drohnen-Akkumulator auf, und die Basisstation weist eine Ladevorrichtung für die Flugdrohne auf. Das Verfahren umfasst die folgenden Schritte:
a) Laden des Drohnen-Akkumulators mit der Ladevorrichtung der Basisstation,
b) Anfliegen des elektrischen Geräts mit der Flugdrohne,
c) Laden des Geräte-Akkumulators mit elektrischer Energie aus dem Drohnen-Akkumulator der Flugdrohne und
d) Anfliegen der Basisstation mit der Flugdrohne.

Das elektrische Gerät ist also ein akkubetriebenes und insbesondere auch kabelloses elektrisches Gerät, welches nicht über ein Stromnetz mit elektrischer Energie versorgt wird, sondern für eine bestimmte Betriebsdauer autark ist. Dieses akkubetriebene elektrische Gerät ist insbesondere stationär, mit anderen Worten ist es zumindest vorübergehend an einem festen Ort installiert. Vorteilhaft kann es in einem Innenraum eines Gebäudes oder innerhalb einer anderen Art von Innenraum installiert sein.

Die genannten Verfahrensschritte können beispielsweise in der genannten Reihenfolge durchlaufen werden. Alternativ kann die Reihenfolge aber auch davon abweichen, und insbesondere können ein oder mehrere der Verfahrensschritte auch wiederholt durchlaufen werden. Es können auch weitere zusätzliche Schritte vor, zwischen und/oder nach den genannten Schritten durchgeführt werden. So kann die Flugdrohne außer dem Anfliegen von Gerät und Basisstation und dem Laden von Drohnen- und Geräte-Akkumulator noch weitere Aufgaben erfüllen. Beispielsweise kann die Flugdrohne auch für Mess- bzw. Überwachungsaufgaben vorgesehen sein und/oder kann Gegenstände bzw. Materialien transportieren.

Der Kerngedanke der vorliegenden Erfindung besteht jedenfalls darin, dass eine Flugdrohne dazu verwendet wird, um einen Ackumulator eines lokal installierten elektrischen Geräts zumindest teilweise aufzuladen. Ein vollständiges Aufladen ist hierbei nicht nötig. Es genügt vielmehr, wenn die mobile Flugdrohne elektrische Energie in ein oder mehreren kleinen Portionen auf das lokal installierte elektrische Gerät überträgt. Hierdurch kann die Betriebsdauer des elektrischen Geräts verlängert werden und es können insbesondere Eingriffe menschlicher Nutzer zum Nachladen des elektrischen Geräts vermieden werden. Hierdurch wird der Arbeitsaufwand reduziert, und das System kann über eine längere Dauer autark betrieben werden. Alternativ oder zusätzlich kann auch der Ackumulator des elektrischen Geräts kleiner dimensioniert werden als dies ohne das beschriebene Verfahren möglich wäre. Auf ein Energy Harvesting im Bereich des elektrischen Geräts kann gegebenenfalls verzichtet werden oder das Nachladen mittels der Flugdrohne kann ergänzend zu einem lokalen Energy Harvesting erfolgen, wobei der Miniaturgenerator dann für entsprechend geringere Leistungen dimensioniert werden kann.

Die in dem Drohnen-Akkumulator der Flugdrohne gespeicherte elektrische Energie ist eine wertvolle Ressource, da die Größe des Drohnen-Akkumulators meist nicht unwesentlich zum Fluggewicht der Drohne beiträgt und dieses für viele Anwendungen möglichst gering gehalten werden soll. Die Betriebsdauer der Flugdrohne selbst ist meist durch die im Drohnen-Akkumulator speicherbare Energiemenge begrenzt, so dass es generell unerwünscht ist, diese wertvolle Energie für andere Zwecke als den Betrieb der Flugdrohne zu verwenden. Schließlich wird durch eine solche anderweitige Verwendung allgemein die verfügbare Flugdauer der Drohne verkürzt. Die vorliegende Erfindung beruht aber auf der Erkenntnis, dass es trotz dieser Randbedingungen sinnvoll sein kann, aus der elektrischen Energie des Drohnen-Akkumulators andere elektrische Geräte zumindest in relativ kleinen Energiemengen zu versorgen, um für das Gesamt-System den Wartungsaufwand zu verringern und die Dauer eines autarken Betriebs zu erhöhen.

Das erfindungsgemäße System umfasst entsprechend wenigstens ein elektrisches Gerät, wenigstens eine Basisstation und wenigstens eine Flugdrohne. Das elektrische Gerät weist einen Geräte-Akkumulator auf, die Flugdrohne weist einen Drohnen-Akkumulator auf, und die Basisstation weist eine Ladevorrichtung für die Flugdrohne auf. Dieses System ist dazu ausgelegt, mit dem vorab beschriebenen erfindungsgemäßen Verfahren betrieben zu werden.

So ist insbesondere das elektrische Gerät dazu ausgelegt, in Schritt c) bei ausreichender räumlicher Nähe der Flugdrohne mit elektrischer Energie aus dem Drohnen-Akkumulator aufgeladen zu werden. So können beispielsweise das elektrische Gerät und die Flugdrohne zueinander passende und beim Andocken der Drohne in Verbindung zu bringende elektrische Ladekontakte aufweisen. Alternativ können die Flugdrohne und das elektrische Gerät eine übergeordnete Vorrichtung zum kontaktlosen Laden des Geräte-Akkumulators aufweisen, beispielsweise mit Spulen zum induktiven Laden. Die Drohne ist insbesondere autonom flugfähig und auch autonom an die Basisstation und das aufzuladende elektrische Gerät andockbar bzw. in einer für das Laden ausreichender räumlicher Nähe positionierbar. Für die autonome Durchführung dieser Aufgaben kann das System mit einer entsprechenden Steuervorrichtung für die Flugdrohne versehen sein. Diese Steuervorrichtung kann beispielsweise in die Basisstation integriert sein, in die Flugdrohne integriert sein oder aber die Funktionalität der Steuervorrichtung kann auch über Basisstation und Flugdrohne verteilt sein. Allgemein ergeben sich die Vorteile des erfindungsgemäßen Systems analog zu den oben beschriebenen Vorteilen des Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens und des Systems allgemein vorteilhaft miteinander kombiniert werden.

Gemäß einer allgemein bevorzugten Ausführungsform des Verfahrens werden alle beschriebenen Schritte a) bis d) von dem System autonom durchgeführt, also ohne Einwirkung eines menschlichen Benutzers. Auch weitere optional durchzuführende Schritte können insbesondere autonom erfolgen. Insbesondere ist die Flugdrohne also autonom flugfähig, und auch die Ladevorgänge in den Schritten a) und c) werden vorteilhaft autonom ausgeführt. Bei einem solchen autonomen Betrieb kann der zur Steuerung verwendete Computer bzw. Microcontroller entweder im Bereich der Flugdrohne selbst und/oder im Bereich der Basisstation angeordnet sein oder auch in einem weiteren optionalen Steuerungssystem. Wesentlich ist bei dieser Variante nur, dass für die Steuerung kein menschlicher Benutzer notwendig ist. Bei der autonom steuerbaren Variante kommen die Vorteile der Erfindung besonders zum Tragen, da durch das Aufladen des Geräte-Akkumulators mittels der Flugdrohne die autonome Betriebszeit des gesamten Systems wesentlich verlängert werden kein, da manuelle Eingriffe zur Wartung bzw. zum Aufladen des elektrischen Geräts vorteilhaft vermieden oder zumindest hinausgezögert werden.

Die Flugdrohne weist bevorzugt eine elektrische Antriebsvorrichtung auf, wobei die von dieser Antriebsvorrichtung benötigte Energie von dem Drohnen-Akkumulator bereitgestellt wird. Allgemein vorteilhaft ist die Flugdrohne zum senkrechten Starten und Landen ausgelegt. Dazu kann die Flugdrohne beispielsweise als Multicopter oder als Helikopter ausgestaltet sein. Allgemein ist im Hinblick auf eine hohe Flugstabilität die Ausgestaltung als Multicopter besonders bevorzugt. Besonders vorteilhaft kann die Flugdrohne als Quadrocopter ausgestaltet sein. Alternativ kann sie aber auch ein Hexacopter, Octocopter, Bicopter oder Tricopter sein. Vor allem mit den höheren Rotorzahlen von 4, 6 oder 8 werden besonders stabile Fluglagen erreicht, und bei Rotorzahlen von 6 oder mehr kann auch eine gewisse Ausfallsicherheit in Bezug auf den Ausfall eines Rotors erreicht werden. Bei niedrigeren Rotorzahlen ist allerdings das Fluggewicht typischerweise geringer, so dass insgesamt der Quadrocopter besonders zweckmäßig ist.

Bei der Flugdrohne soll es sich also um ein unbemanntes Luftfahrzeug handeln, wobei die Gewichtsklasse zunächst beliebig ist, allerdings eine niedrige Gewichtsklasse im Zusammenhang mit der Erfindung allgemein besonders bevorzugt ist. Allgemein und unabhängig von der genauen konstruktiven Ausgestaltung kann die Flugdrohne vorteilhaft eine Gesamtmasse (also ein Fluggewicht) unterhalb von 250 g aufweisen. Besonders bevorzugt kann die Gesamtmasse sogar bei höchstens 200 g, insbesondere sogar höchstens 150 g liegen. Bei derart leichten Flugdrohnen ist die Regulierung weniger streng, und es liegen geringere gesetzliche Anforderungen in Bezug auf eine Registrierung bzw. Zulassung oder Betriebserlaubnis vor. Die Masse des Drohnen-Akkumulators hat typischerweise einen nicht unwesentlichen Anteil an der Gesamtmasse der Drohne, beispielsweise zwischen 30% und 80% dieser Gesamtmasse. Somit ist auch die Größe des Drohnen-Akkumulators bei solchen ultraleichten Flugdrohnen stark begrenzt, und es steht insgesamt sehr wenig darin speicherbare elektrische Energie zur Verfügung. Doch selbst in diesem Fall kann es im Rahmen der Erfindung vorteilhaft sein, einen Teil dieser gespeicherten Energie gemäß Schritt c) auf den Geräte-Akkumulator zu transferieren, um die Einsatzdauer des elektrischen Geräts zu verlängern. Die in einem solchen einzelnen Ladeschritt c) transferierte Energiemenge kann dabei sehr klein sein, wobei die Vorteile der Erfindung trotzdem erreicht werden. Dies ist insbesondere dann der Fall, wenn das elektrische Gerät einen vergleichsweise geringen durchschnittlichen Energiebedarf hat und/oder wenn das Gerät in mehreren einzelnen Teilschritten nacheinander angeflogen und aufgeladen wird, wenn es also nacheinander mit einer Mehrzahl von kleineren Teil-Portionen von elektrischer Energie versorgt wird.

Allgemein ist die in Schritt c) übertragene Energiemenge nicht auf einen bestimmten Wert begrenzt. Sie kann unter Umständen auch relativ groß sein, beispielsweise bis zu 100.000 mAh innerhalb eines einzelnen Ladeschritts. Besonders vorteilhaft ist es aber, wenn die in einem einzelnen Ladeschritt übertragene Energiemenge klein ist und z.B. bei 100 mAh oder weniger liegt, insbesondere im Bereich zwischen 1 mAh und 50 mAh. Eine derart kleine Energie-Portion kann von der Flugdrohne für das elektrische Gerät bereitbestellt werden, ohne die verbleibende Flugdauer der Drohne allzu stark zu reduzieren. Trotzdem kann auch eine solche kleine Energiemenge dazu beitragen, die Betriebsdauer eines leistungsarmen elektrischen Geräts merklich zu verlängern. Dabei kann die durchschnittliche Leistung des elektrischen Geräts vorteilhaft unterhalb von 10 mW liegen, insbesondere sogar unterhalb von 1 mW.

Gemäß einer vorteilhaften Ausführungsform des Verfahrens können insgesamt mehrere Teil-Ladeschritte cᵢ durchgeführt werden, wobei zwischen den einzelnen Teil-Ladeschritten cᵢ jeweils die Schritte d), a) und b) durchgeführt werden. Mit anderen Worten wird der gesamte Ladevorgang des elektrischen Geräts unterbrochen und in mehrere Teil-Ladeschritte c₁, c₂, c₃, usw. unterteilt, um zwischen diesen einzelnen Teil-Ladeschritten cᵢ den Drohnen-Akkumulator jeweils an der Basisstation neu aufladen zu können. Selbst wenn also der Drohnen-Akkumulator nicht ausreichend groß dimensioniert ist, um in einem Ladeschritt eine ausreichende Energiemenge auf den Geräte-Akkumulator zu übertragen, so kann das Ziel der Verlängerung der Betriebsdauer trotzdem erreicht werden, wenn dieses Nachladen auf mehrere Teilschritte aufgeteilt wird und entsprechend die benötigte Energiemenge in mehreren kleinen Teilportionen auf das zu ladende Gerät übertragen wird.

Gemäß einer ersten vorteilhaften Ausführungsvariante von Schritt b) kann dieser folgende Teilschritte umfassen:
b1) Abdocken der Flugdrohne von der Basisstation und
b2) Andocken der Flugdrohne am elektrischen Gerät durch ein Landen der Flugdrohne auf einem Landebereich des elektrischen Geräts.

Das Abdocken von der Basisstation gemäß Schritt b1) kann beispielsweise in einem Starten von einer Landefläche der Basisstation bestehen. Dabei kann ggf. eine Trennung der für das Aufladen an der Basisstation in elektrischen Kontakt gebrachten Kontaktelektroden erfolgen. Diese Kontakttrennung kann entweder in einem separaten, dem eigentlichen Drohnenstart vorgelagerten Schritt oder auch gleichzeitig mit dem Starten der Drohne erfolgen. Die Erzeugung einer solchen elektrischen Kontaktierung für das Laden ist aber auch nicht zwingend, da das Laden in den Schritten a) und c) ggf. auch kontaktlos erfolgen kann.

In jedem Fall soll bei dieser ersten Ausführungsvariante das Andocken am elektrischen Gerät gemäß Schritt b2) in einer Landung im Bereich dieses elektrischen Geräts und insbesondere auf einem Teil dieses Geräts bestehen. Mit anderen Worten wird der Flug der Drohne unterbrochen, um den Ladeschritt c) einzuleiten. Auch bei diesem Andocken am zu ladenden Gerät kann gegebenenfalls die Ausbildung elektrischer Kontakte erfolgen. Alternativ ist auch hier ein kontaktloses Laden möglich.

Auch der Schritt d) kann bei dieser ersten Ausführungsvariante vorteilhaft die entsprechenden Teilschritte umfassen:
d1) Abdocken der Flugdrohne von dem elektrischen Gerät und
d2) Andocken der Flugdrohne an der Basisstation.

In entsprechender Weise kann auch hier das Abdocken in Schritt d1) durch einen Start der Flugdrohne von dem Landebereich des elektrischen Geräts erfolgen, und das Andocken in Schritt d2) kann durch eine Landung auf einer Landefläche der Basisstation erfolgen.

Insgesamt erfolgt also das Umladen der elektrischen Energie bei der ersten Ausführungsvariante zumindest bei Schritt c) und optional auch bei Schritt a) in einem Zustand, bei dem die Flugdrohne gelandet ist und der Flug temporär unterbrochen ist. Dies bewirkt den Vorteil, dass der Ladevorgang in diesem stationären Zustand relativ einfach und stabil durchgeführt werden kann und außerdem, dass während des Ladens keine elektrische Energie für das Fliegen aufgewendet werden muss.

Bei einer alternativen, zweiten Ausführungsvariante für den Schritt b) umfasst dieser die folgenden Teilschritte:
b1) Abdocken der Flugdrohne von der Basisstation und
b2') schwebendes Andocken der Flugdrohne am elektrischen Gerät.

Das Abdocken in b1) kann auch hier ähnlich erfolgen wie bei der ersten Variante, also insbesondere durch einen Start der Drohne von einer Landefläche der Basisstation. Der entscheidende Unterschied zur ersten Variante ist, dass hier in Schritt b2') keine Landung im Bereich des aufzuladenden elektrischen Geräts erfolgt, sondern dass das Andocken hier in einem schwebenden Zustand der Drohne erreicht wird. Insbesondere wird dann auch der Ladevorgang gemäß Schritt c) in einem Zustand durchgeführt, bei dem die Flugdrohne am elektrischen Gerät schwebend angedockt ist. Hierzu muss die Flugdrohne zwar während des Schritts c) elektrische Energie aufwenden, um sich in diesem schwebenden Zustand halten zu können. Allerdings kann im Bereich des elektrischen Geräts der Platz eingespart werden, der bei der ersten Variante für einen Landebereich für die Flugdrohne zur Verfügung gestellt werden muss. Somit kann die zweite Ausführungsvariante vor allem in den Fällen vorteilhaft sein, bei denen im Bereich des aufzuladenden Elektrischen Geräts nicht genügend Platz für eine Landung der Drohne zur Verfügung steht. Die Drohne kann dabei allgemein entweder unter, über oder auch neben dem elektrischen Gerät schweben. Zum Beispiel kann ein Rauchmelder oder ein anderes an einer Decke montiertes Gerät von einer unterhalb des Geräts schwebenden Drohne aufgeladen werden. Es sind auch zahlreiche andere Einbau-Situationen von elektrischen Geräten denkbar, bei denen kein Platz für eine Landung zur Verfügung steht, das Gerät aber trotzdem von einer schwebenden Drohne beladen werden kann. Je schwieriger das Gerät zugänglich ist, umso vorteilhafter sind in diesem Zusammenhang kleine und kompakte Drohnen, zumal bei einem geringen Fluggewicht entsprechend wenig Energie für den Schwebezustand aufgewendet werden muss.

Auch bei dieser zweiten Variante kann der Schritt d) die vorab beschriebenen Teilschritte d1) und d2) umfassen. Dabei kann das Andocken der Flugdrohne an der Basisstation in d2) prinzipiell auch ein schwebendes Andocken sein. Alternativ kann das Andocken in d2) aber auch wiederum ein Landen auf einem Landebereich der Basisstation sein, da im Bereich der Basisstation typischerweise genügend Platz für eine Landung der Drohne zur Verfügung steht.

Allgemein und unabhängig von der Art des Andockens der Flugdrohne am elektrischen Gerät kann das Laden in Schritt c) auf unterschiedliche Art und Weise erfolgen. So kann gemäß einer ersten Ausführungsform das Laden über elektrische Kontakte erfolgen, welche beim Andocken der Flugdrohne an das elektrische Gerät verbunden werden. Analog kann auch das Aufladen an der Basisstation in Schritt a) kontaktgebunden erfolgen. Eine besonders vorteilhafte Realisierung für das kontaktgebundene Aufladen einer Flugdrohne an einer Basisstation ist in der noch nicht offengelegten europäischen Patentanmeldung mit dem Anmeldeaktenzeichen 21163368.0 beschrieben. Diese frühere Anmeldung soll daher in den Offenbarungsgehalt der vorliegenden Anmeldung einbezogen sein. Hier wird eine Kontaktierung dadurch bewirkt, dass Standfüße der Flugdrohne bei der Landung automatisch mit Elektrodenflächen im Bereich der Landefläche der Basisstation in Verbindung treten. Die Standfüße der Flugdrohne können zum Beispiel Federkontaktstifte sein, die das Landegestellt der Drohne ausbilden. Auch beim Andocken an das elektrische Gerät kann die Ausbildung der Kontakte analog zu dem in der Anmeldung 21163368.0 beschriebenen Verfahren auf einer entsprechenden Landefläche des elektrischen Geräts (mit entsprechenden Kontaktelektroden) realisiert werden. Wenn in Schritt c) kontaktgebunden geladen wird, dann können die dazu ausgebildeten elektrischen Kontakte oder ggf. auch weitere, zusätzlich dazu ausgebildete Kontakte dazu verwendet werden, auch Daten kontaktgebunden zwischen der Flugdrohne und dem elektrischen Gerät zu übertragen. Eine solche kontaktgebundene Datenübertragung kann beispielsweise vorteilhaft sein, um im Vergleich zur kontaktlosen Datenübertragung den apparativen Aufwand zu reduzieren und/oder die Sicherheit bzw. die Übertragungsrate der Datenübertragung zu erhöhen. So kann eine solche kontaktgebundene Datenübertragung beispielsweise für Software-Updates bzw. für eine Kalibration oder Konfiguration des elektrischen Geräts verwendet werden und/oder um vom elektrischen Gerät gemessene Daten auf die Flugdrohne zu übertragen.

Alternativ zu diesem kontaktgebundenen Laden kann das Laden in Schritt c) aber auch kontaktlos erfolgen. Insbesondere kann dieses Laden durch induktive Kopplung zwischen zwei Spulen (über sogenannte Nahfeld-Kopplung) erfolgen. Alternativ ist aber auch eine kontaktlose Kopplung über ein strahlendes Fernfeld wie z.B. über Licht oder Funksignale möglich. Bei einem solchen kontaktlosen Ladevorgang ist beim Andocken der Flugdrohne an das elektrische Gerät im Schritt b2) nicht notwendigerweise eine Berührung zwischen Drohne und Gerät nötig, sondern es reicht aus, eine stabile Lage in ausreichender räumlicher Nähe herzustellen. Diese stabile Lage kann wiederum entweder durch eine Landung der Drohne im Bereich des Geräts oder durch ein schwebendes Andocken erreicht werden. Die Übertragungsstrecke für das kontaktlose Laden kann beispielsweise weniger als 10 cm und insbesondere weniger als 1 cm betragen, beispielsweise wenige Millimeter. Wenn die Flugdrohne zum kontaktlosen Laden ausgebildet ist, kann bei dieser Variante optional auch Schritt a) kontaktlos ausgeführt werden, insbesondere mit einem entsprechenden kontaktlosen Ladeverfahren.

Allgemein vorteilhaft und unabhängig von der genauen Art des Ladens kann es sich bei dem zu ladenden elektrischen Gerät um ein kabelloses elektrisches Gerät handeln. Es ist also nicht über ein Kabel mit einem übergeordneten Stromversorgungsnetz oder mit weiteren Geräten verbunden. So kann sogar das gesamte System weitgehend kabellos ausgestaltet sein, wobei beispielsweise nur die Basisstation durch ein Kabel mit einem übergeordneten Stromversorgungsnetz verbunden ist. Sogar dieses Kabel kann entfallen oder ist zumindest optional, wenn z.B. die Basisstation mit einem ausreichend groß dimensionierten Akkumulator ausgestattet ist, welcher nur gelegentlich am Stromnetz aufgeladen werden muss. Bei dieser weitgehend kabellosen Ausführungsform des Systems ist es allgemein vorteilhaft, wenn die einzelnen Teilelemente (also ein oder mehrere elektrische Geräte, die Flugdrohne und die Basisstation) zur kabellosen gegenseitigen Datenübertragung ausgelegt sind.

Das wenigstens eine elektrische Gerät kann vorteilhaft ein Sensor-Gerät sein. Sensor-Geräte weisen häufig einen relativ geringen durchschnittlichen Energieverbrauch auf und sind daher für ein Aufladen mit dem erfindungsgemäßen Verfahren besonders geeignet. Ein solches Sensor-Gerät benötigt beispielsweise eine relativ geringe durchschnittliche Leistung für die Durchführung des Messverfahrens selbst sowie ggf. für einen optional im Sensor-Gerät vorliegenden Mikrocontroller und/oder eine optionale kabellose Datenübertragung an eine weitere Systemeinheit. Das Sensor-Gerät kann beispielsweise ein Rauchsensor für die Branddetektion in Gebäuden sein. Alternativ kann es sich beispielsweise um einen Temperatursensor, einen Drucksensor, einen Vibrationssensor, einen Geräuschsensor, einen Lichtsensor, einen Gassensor und/oder einen Sensor für ein elektrisches oder magnetisches Feld handeln. Das übergeordnete System ist dann ein Sensorsystem, welches ein oder mehrere Sensoren aufweisen kann, welche ggf. auf verschiedenen Messprinzipien basieren können.

Besonders vorteilhaft kann das Sensor-Gerät ein IoT-Sensor sein, wobei IoT für "Internet of Things" also englisch für "Internet der Dinge" steht. Ein solcher IoT-Sensor wird über eine Kommunikationsschnittstelle und insbesondere ein Internet-Protokoll in ein übergeordnetes Kommunikationsnetzwerk eingebunden und weist dazu einen integrierten Mikrocontroller auf.

Das übergeordnete System mit ein oder mehreren Sensor-Geräten kann vorteilhaft ein Überwachungs-System sein, insbesondere zur Überwachung eines Innenraums. Kernbestandteil eines solchen Überwachungssystems ist das wenigstens eine (insbesondere stationäre) Sensor-Gerät, durch dessen Messung beispielsweise ein Zustand oder ein Prozess überwacht werden kann. Der Innenraum kann insbesondere der Innenraum eines Gebäudes sein. Alternativ kann ein solches Überwachungssystem auch für andere Arten von Innenräumen eingesetzt werden, in denen ähnliche Verhältnisse vorliegen. Zum Beispiel kann es sich um einen Innenraum eines Fahrzeugs (z.B. eines Zuges oder eines Schiffes) oder auch einer anderen geschlossenen Anlage (z.B. einer Gasturbine oder eines Luftkanals oder einer anderen Art von Versorgungsschacht) handeln. Ein wichtiges Anwendungsbeispiel für ein solches Überwachungs-System ist die Überwachung von Prozessabläufen in einer Industrieanlage, insbesondere industriellen Fertigungsanlage. Alternativ oder zusätzlich kann das Überwachungssystem zur Erkennung eines Brands und/oder eines unerwünschten Lecks eines Gases oder einer Flüssigkeit in einem Gebäude eingesetzt werden. Die beschriebenen Drohnenflüge können in einem solchen Gebäude bzw. in einer solchen Industrieanlage bevorzugt dann durchgeführt werden, wenn wenig Betrieb herrscht, also insbesondere nachts oder wenn die Produktion aus anderen Gründen unterbrochen ist. Aber auch während des Betriebs kann mit einer kleinen und kompakten Drohne unter Umständen ein entsprechendes Anfliegen des wenigstens einen Sensor-Geräts erfolgen.

Alternativ oder zusätzlich zu der Ausgestaltung des wenigstens einen elektrischen Geräts als Sensor-Gerät kann auch die Flugdrohne wenigstens einen Drohnen-Sensor aufweisen. Das Verfahren kann dann vorteilhaft den folgenden zusätzlichen Schritt aufweisen:
c1) Inspektion des elektrischen Geräts mit dem Drohnen-Sensor.

Dieser Inspektions-Schritt c1) kann insbesondere dann erfolgen, wenn die Flugdrohne am Gerät angedockt ist oder sich zumindest in der Nähe des Geräts befindet, wenn sie also gemäß Schritt b) das Gerät angeflogen hat. Prinzipiell kann dieser Inspektions-Schritt c1) vor, nach und/oder zeitlich überlappend mit dem Ladeschritt c) erfolgen. Der beschriebene Drohnen-Sensor kann beispielsweise eine in die Flugdrohne integrierte Kamera sein. Alternativ oder zusätzlich kann auch ein weiterer Sensor-Typ in die Drohne integriert sein, um unabhängig von einer visuellen Überwachung eine weitere physikalische Eigenschaft in der Umgebung des elektrischen Geräts zu messen. Bezüglich der Arten von integrierten Sensoren, mit denen eine Innenraum-Überwachung mit Hilfe einer autonomen Flugdrohne vorgenommen werden kann, wird auf die noch nicht offengelegte europäische Anmeldung mit dem Aktenzeichen 21176016.0 verweisen, deren Inhalt ebenfalls in den Offenbarungsgehalt der vorliegenden Anmeldung einbezogen sein soll. Auf diese Weise kann die Flugdrohne nicht nur zum Aufladen, sondern auch zum Überwachen, Überprüfen, Testen bzw. Kalibrieren des betreffenden elektrischen Geräts eingesetzt werden. Ein Vorteil im Zusammenhang mit dem erfindungsgemäßen Laden besteht vor allem darin, dass eine Flugdrohne, deren Hauptaufgabe eine Inspektion des jeweiligen Geräts ist, quasi nebenbei eine kleinere Energie-Portion dort abgeben kann und somit bei relativ geringem apparativem Aufwand und ohne eine wesentliche Beeinträchtigung der erreichbaren Flugdauer zur Verlängerung der Betriebsdauer des lokal installierten Geräts beitragen kann.

Wenn die Drohne mit einer Kamera ausgestattet ist, kann sich die Inspektion gegebenenfalls auf eine optische Inspektion des jeweiligen Geräts beschränken. Eine solche Kamera kann außerdem zur Unterstützung des autonomen Fliegens eingesetzt werden, beispielsweise im Rahmen eines SLAM-Verfahrens (SLAM für "Simultaneous Localization and Mapping"), wie in der oben genannten europäischen Anmeldung 21176016.0 beschrieben.

Gemäß einer allgemein vorteilhaften Ausführungsform kann das System nicht nur ein, sondern mehrere elektrische Geräte aufweisen, welche in entsprechenden Schritten b) und c) von der Flugdrohne angeflogen und aufgeladen werden. Gegebenenfalls können dann auch weitere gerätebezogene Schritte für jedes Gerät separat durchgeführt werden, wie z.B. der oben beschriebene Inspektionsschritt c1). Ein solches System mit mehreren elektrischen Geräten liegt zum Beispiel vor, wenn ein Überwachungs-System eine Mehrzahl von stationär installierten Sensoren umfasst, welche z.B. über verschiedene Positionen eines Innenraums verteilt angeordnet sein können und von der Flugdrohne zumindest teilweise aufgeladen werden. Alternativ oder zusätzlich zu der Mehrzahl von elektrischen Geräten kann das System auch mehrere Flugdrohnen und ggf. auch mehrere Basisstationen für diese Flugdrohnen umfassen. Es kann sich also insgesamt um ein komplexes System handeln, bei der eine Mehrzahl von insbesondere untereinander durch Kommunikationsschnittstellen vernetzten elektrischen Geräten durch Flugdrohnen geladen und optional auch inspiziert werden.

Gemäß einer weiteren bevorzugten Ausführungsform kann das System eine Mehrzahl von elektrischen Geräten aufweisen, welche zusammen zumindest einen Teil eines Indoor Positioning Systems (IPS) ausbilden. Ein solches Indoor Positioning System umfasst insbesondere lokale Transmitter und/oder lokale Sensoren für Funksignale (z.B. für WLAN oder Bluetooth), Infrarotstrahlung oder Ultraschall oder auch sichtbares Licht. Dieses IPS kann dann für die Navigation der Flugdrohne und ggf. auch für die Navigation anderer autonomer Transportgeräte genutzt werden. Bei dieser Ausführungsform versorgt also die Flugdrohne Teile ihres eigenen stationär installierten Navigationssystems mit elektrischer Energie. Alternativ kann die Navigation der Flugdrohne prinzipiell aber auch mit anderen Verfahren erfolgen oder die Navigation mittels IPS kann zusätzlich durch ein anderes Verfahren unterstützt werden. Solche alternativen Navigationsverfahren können beispielsweise auf LIDAR (für englisch "Light Detection and Ranging), einer inertialen Messeinheit (IMU für "inertial measurement unit") oder auf einer optischen Bilderkennung, insbesondere in Kombination mit einem SLAM-Verfahren, beruhen.

Allgemein und unabhängig von der genauen Art und Ausgestaltung des elektrischen Geräts kann das erfindungsgemäße Aufladen dieses Geräts dazu führen, dass auf einen zusätzlichen Miniaturgenerator für elektrische Energie im Bereich des elektrischen Geräts vollständig verzichtet werden kann. Mit anderen Worten kann ein elektrisches Gerät, welches nach herkömmlicher Ausführung mit einem Energy-Harvesting-System ausgestattet werden würde, auch ohne ein solches Energy-Harvesting-System über einen längeren Zeitraum autonom betrieben werden. Alternativ zu einem solchen Verzicht kann aber auch ein Energy-Harvesting-System im Bereich des elektrischen Geräts vorliegen, aber dieses kann aufgrund der mit der Erfindung geschaffenen Möglichkeit des zusätzlichen Aufladens für einen geringeren Leistungsbereich dimensioniert werden, als dies ohne die Flugdrohne möglich wäre.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung einer Flugdrohne auf einer Landefläche einer Basisstation zeigt,
- Figur 2: eine schematische Aufsicht einer Basisstation für eine solche Flugdrohne zeigt,
- Figur 3: eine schematische perspektivische Darstellung eines Innenraums mit einem Überwachungssystem zeigt und
- Figuren 4 bis 7: eine schematische Darstellung eines beispielhaften Systems in verschiedenen Stadien des erfindungsgemäßen Verfahrens zeigt.

In den Figuren sind gleiche oder funktionsgleiche Elemente mit gleichen Bezugszeichen versehen.

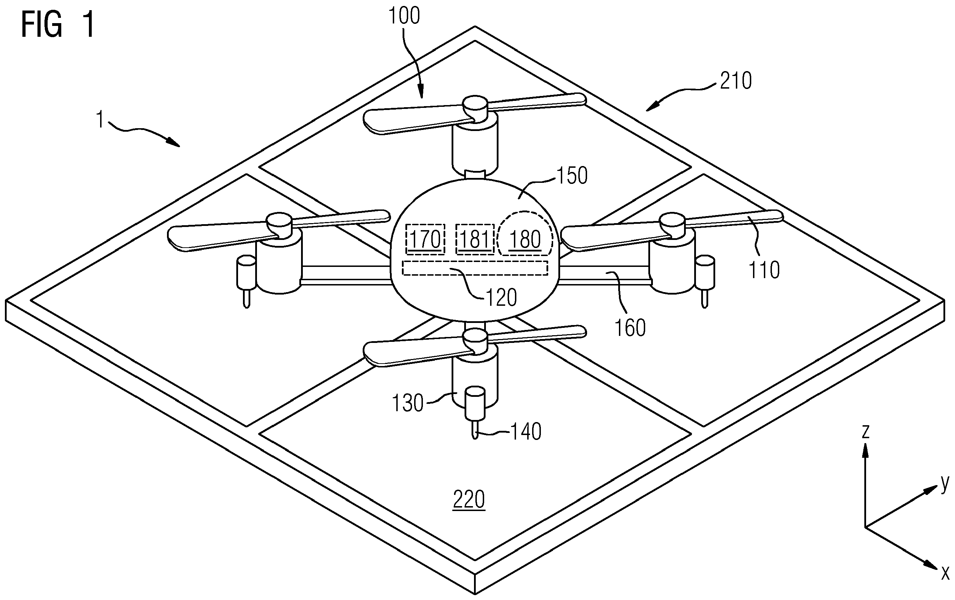

In Figur 1 ist eine schematische perspektivische Darstellung einer Flugdrohne 100 gezeigt, welche auf einer Landefläche 210 einer zugehörigen Basisstation gelandet ist. Flugdrohne und Basisstation sind dabei Teil eines übergeordneten Systems nach einem ersten Beispiel der Erfindung, welches entsprechend dazu ausgelegt ist, mit dem erfindungsgemäßen Verfahren betrieben zu werden. Die Landefläche 210 ist eine ebene Fläche zum Starten und Landen der Flugdrohne. Die hier nur in Teilen gezeigte Basisstation ist mit einer Ladevorrichtung für die Flugdrohne ausgestattet, so dass die Flugdrohne auf der Basisstation mit elektrischer Energie versorgt werden kann. Hierzu ist die Landefläche im vorliegenden Beispiel in vier gleichartige Quadranten unterteilt, die jeweils ein Feld der Landefläche ausbilden. Diese einzelnen Felder 220 sind jeweils als Elektrodenfläche ausgebildet.

Die Flugdrohne 100 ist in diesem Beispiel als Quadrocopter ausgebildet. Sie ist mit einer elektrischen Antriebsvorrichtung ausgestattet, welche durch die vier Rotoren 110 repräsentiert ist. Die elektrischen Antriebsmotoren dieser vier Rotoren 110 werden durch einen Drohnen-Akkumulator 120 mit elektrischer Energie versorgt. Der Drohnen-Akkumulator 120 ist hier im Zentrum der Flugdrohne 100 innerhalb eines zentralen Drohnenkörpers 150 angeordnet. Von dem zentralen Drohnenkörper aus erstrecken sich vier Tragarme 160 nach lateral außen. Die zu den Tragarmen 160 senkrecht stehende z-Achse entspricht der vertikalen Raumrichtung. Es handelt sich in diesem Beispiel bei dem Multicopter um eine im Wesentlichen senkrecht startende und landende Flugdrohne.

In ihren radial außenliegenden Bereichen sind die vier Tragarme 160 jeweils mit einem Standfuß 130 versehen, welcher unterhalb des zugeordneten Rotors 110 sitzt. Diese vier Standfüße bilden zusammen das Landegestell der Flugdrohne. Bei einer Landung auf der Landefläche 210 oder auf einer anderen ebenen Fläche kommt die Flugdrohne auf diesen vier Standfüßen 130 zum Stehen. Bei der besonders vorteilhaften Ausführungsform des Flugsystems gemäß der Anmeldung 21163368.0 weist jeder dieser vier Standfüße 130 im untenliegenden Bereich eine Kontaktelektrode 140 auf. In diesem Beispiel sind die vier Kontaktelektroden 140 als Federkontaktstifte ausgebildet. Die einzelnen Kontaktelektroden sind über hier nicht gezeigte Verbindungsleitungen in oder an den jeweiligen Standfüßen und Tragarmen mit dem zentralen Akkumulator 120 elektrisch verbunden.

Die Flugdrohne 100 weist beim Beispiel der Figur 1 innerhalb ihres zentralen Drohnenkörpers 150 neben dem Akkumulator 120 auch noch ein oder mehrere Mikroprozessoren 170, eine Kamera 180 und ein oder mehrere zusätzliche Drohnen-Sensoren 181 auf. Ein erster Mikroprozessor 170 ist beispielsweise dazu vorgesehen, eine autonome Steuerung der Flugdrohne zu realisieren. Diese Flugdrohne ist also autonom flugfähig und kann beispielsweise für Aufgaben im Innenraumbereich, insbesondere in einer industriellen Fertigungsanlage, eingesetzt werden. Ein zweiter, hier nicht gesondert dargestellter Mikroprozessor ist beispielsweise zur Lageregelung vorgesehen.

Mit dem ersten Mikroprozessor 170 kann auch die Kamera 180 der Flugdrohne angesteuert und ausgelesen werden. Mit dieser Kamera 180 kann die Flugdrohne 100 autonom visuelle Daten über ihre Umgebung sammeln und mit diesen ihr eigenes Flugverhalten steuern bzw. optimieren. Mit dem optionalen zusätzlichen Sensor 181 können während der Drohnenflüge zusätzliche physikalische Eigenschaften gemessen werden, und es können hiermit beispielsweise Messungen zur Inspektion und/oder zur Kalibration von lokal installierten elektrischen Geräten vorgenommen werden.

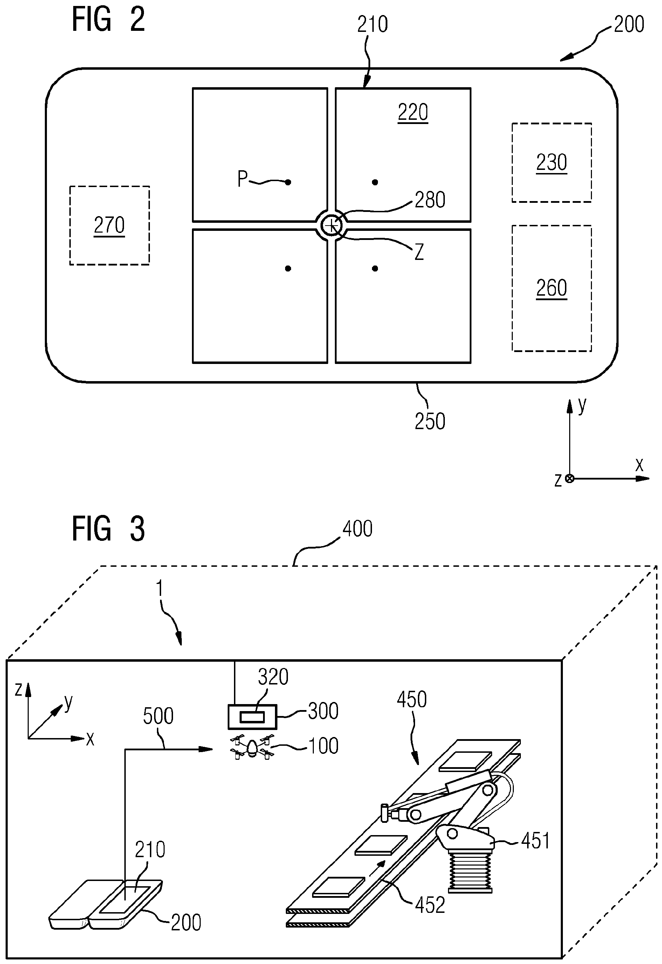

Figur 2 zeigt eine schematische Aufsicht einer Basisstation 200 (oder eines Teils davon), die zusammen mit einer solchen Flugdrohne für die Durchführung des erfindungsgemäßen Verfahrens zum Einsatz kommen kann. Gezeigt ist hier eine Halbschale 250 eines Koffers, in den die Basisstation als leicht portable Einheit integriert sein kann. In diese Kofferschale ist eine ebene Landefläche 210 eingebettet, welche insgesamt ähnlich wie beim Beispiel der Figur 1 ausgestaltet sein kann und entsprechend aus vier Elektrodenflächen 220 zusammengesetzt ist. Diese viergeteilte Landfläche ist insbesondere dazu ausgestaltet, mit einer Flugdrohne mit vier Standfüßen ähnlich wie in der Darstellung der Figur 1 zusammenzuwirken. Insbesondere können vier Kontaktelektroden 140 einer solchen Flugdrohne 100 beim Landen mit den vier Elektrodenflächen in elektrischen Kontakt treten. Nach Herstellung dieser Verbindung kann der Drohnen-Akkumulator über die nur schematisch dargestellte Ladevorrichtung 230 der Basisstation aufgeladen werden. Dieser Ladevorgang kann von einer zentralen Steuervorrichtung 270 der Basisstation aus gesteuert werden und insgesamt ebenfalls autonom erfolgen. Das Flugsystem kann insgesamt energieautark sein, was im vorliegenden Beispiel durch Integration eines weiteren Akkumulators 260 in die portable Basisstation 200 realisiert ist. Alternativ kann die Basisstation 200 aber auch zur Energieversorgung mit einem übergeordneten Stromnetz verbunden sein.

Im Zentrum Z ihrer Landefläche 210 kann die Basisstation eine optionale Kamera 280 aufweisen. Diese Kamera 280 wird von der zentralen Steuervorrichtung 270 der Basisstation angesteuert und ausgelesen. Mittels Bewegungs- und Objekterkennung kann so eine im Landeanflug befindliche Flugdrohne 100 von der Basisstation 200 autonom erkannt werden, und es kann eine Landeroutine ausgelöst werden, durch die die Standfüße 130 der Flugdrohne in einem Bereich um die Sollpositionen P positioniert werden.

Prinzipiell können die Flugdrohne 100 und die Basisstation 200 im Detail auch anders ausgestaltet sein als beim Beispiel der Figuren 1 und 2. Wesentlich ist im Zusammenhang mit der vorliegenden Erfindung nur, dass der Drohnen-Akkumulator 120 der Flugdrohne über eine Ladevorrichtung aufgeladen werden kann, wenn die Flugdrohne im Bereich der Basisstation angedockt ist. Außerdem ist die Flugdrohne zweckmäßigerweise autonom flugfähig, und auch das Andocken an der Basisstation, der Ladevorgang selbst und das Abdocken von der Basisstation können vorteilhaft jeweils autonom durchgeführt werden.

Figur 3 zeigt eine schematische teilperspektivische Darstellung eines übergeordneten Systems 1 nach einem Ausführungsbeispiel der Erfindung. Bei dem beispielhaften System 1 handelt es sich um ein Überwachungs-System für einen Innenraum 400. In dem zu überwachenden Innenraum 400 ist bei diesem Beispiel eine Industrieanlage 450 angeordnet, z.B. eine industrielle Fertigungsstraße mit ein oder mehreren Fertigungsrobotern 451 und einer Förderanlage 452. Das ÜberwachungsSystem 1 für diese Fertigungsanlage umfasst ein Flugsystem mit einer Basisstation 200 und einer Flugdrohne 100, das insbesondere ähnlich wie beim Beispiel der Figuren 1 und 2 ausgestaltet sein kann. Außerdem umfasst das übergeordnete System 1 ein oder mehrere stationär installierte elektrische Geräte 300, von denen hier nur eines beispielhaft gezeigt ist. Dieses elektrische Gerät 300 ist insbesondere ein Sensor-Gerät, mit welchem eine kontinuierliche Überwachung eines Zustandes und/oder eines Prozessfortschritts der Fertigungsanlage ermöglicht wird. Dieses Sensor-Gerät 300 ist im vorliegenden Beispiel in der Nähe der Decke des Innenraums 400 montiert bzw. hängt von dieser Decke herab. Prinzipiell kann das Gerät aber auch an beliebigen anderen Orten innerhalb des Innenraums installiert sein und es können insbesondere viele solche elektrische Geräte von dem System umfasst sein. Das wenigstens eine elektrische Gerät 300 ist bei diesem Beispiel ein kabelloses Gerät, welches nicht mit einem übergeordneten Stromnetz verbunden ist. Stattdessen weist das Gerät 300 einen Geräte-Akkumulator 320 zur lokalen Speicherung von elektrischer Energie zum Betrieb dieses Geräts auf.

Das gesamte System 1 ist dazu ausgebildet, mit dem erfindungsgemäßen Verfahren betrieben zu werden. So kann zunächst in einem Schritt a) der Drohnen-Akkumulator 120 der Flugdrohne mit der Ladevorrichtung der Basisstation aufgeladen werden, z.B. so wie vorab im Zusammenhang mit den Figuren 1 und 2 erläutert. Anschließend kann die Flugdrohne autonom das elektrische Gerät 300 anfliegen, z.B. entlang der schematisch gezeigten Flugbahn 500. Dabei kann die Flugdrohne am Beginn der Flugbahn in einem Schritt b1) von der Basisstation abdocken und am Ende der Flugbahn in einem Schritt b2) am elektrischen Gerät andocken. Dazwischen liegt die eigentliche Flugbewegung der Flugdrohne. Im Anschluss an das Andocken am elektrischen Gerät wird in einem Schritt c) der Geräte-Akkumulator 320 mit elektrischer Energie aus dem Drohnen-Akkumulator der Flugdrohne 100 geladen. Schließlich erfolgt ein Schritt d) bei dem die Flugdrohne erneut die Basisstation anfliegt. Auch hierbei erfolgt zunächst ein Abdocken von dem Gerät 300, dann der eigentliche Flug und danach ein Andocken an der Basisstation. Zwischen diesen einzelnen Verfahrensschritten können optional auch zusätzliche weitere Schritte liegen, beispielsweise wenn die Flugdrohne nach einem ersten elektrischen Gerät noch weitere solche Geräte anfliegt, bevor sie zur Basisstation zurückkehrt, oder wenn sie zwischendurch noch weitere Aufgaben erledigt wie z.B. die Durchführung von Messungen mittels des Drohnen-Sensors und/oder der integrierten Kamera. Der Drohnen-Sensor 181 bzw. die integrierte Kamera 180 kann beispielsweise auch dazu genutzt werden, das zu ladende elektrische Gerät in einem weiteren Schritt c1) zu inspizieren, zu testen und/oder zu kalibrieren. Ein solcher Inspektions-Schritt kann vor, nach und/oder zeitlich überlappend mit dem Ladeschritt c) erfolgen. Zweckmäßigerweise erfolgt er auf jeden Fall dann, wenn die Flugdrohne 100 sich in räumlicher Nähe des elektrischen Geräts 300 befindet, wie in Figur 3 dargestellt.

Insgesamt wird jedenfalls mit dem beschriebenen Verfahren das kabellose elektrische Gerät 300 durch die Flugdrohne mit einer gewissen Menge an elektrischer Energie versorgt, wobei diese Energie aus dem Drohnen-Akkumulator 120 zur Verfügung gestellt wird und wobei insbesondere die bei einem einzelnen Ladeschritt transferierte Energiemenge vergleichsweise klein sein kann. Gegebenenfalls können die oben beschriebenen Schritte wiederholt durchgeführt werden, um in Summe das elektrische Gerät 300 mit einer ausreichenden Energiemenge zu versorgen. In jedem Fall kann über ein solches autonomes Aufladen eine relativ lange autonome Betriebsdauer des gesamten Systems 1 erreicht werden. So kann insbesondere ein autonomer Betrieb des Systems über mehrere Wochen und vorteilhaft sogar mehrere Monate oder sogar Jahre ermöglicht werden.

Bei dem Beispiel der Figur 3 ist gezeigt, wie die Drohne sich am Ende der Flugbahn 500 unter dem zu ladenden elektrischen Gerät befindet. Bei dieser Ausführungsvariante wird die Flugdrohne also nicht im Bereich des Geräts 300 abgesetzt, sondern es handelt sich um ein schwebendes Andocken. Alternativ kann die Flugdrohne aber auch im Bereich des Geräts landen, insbesondere wenn im Bereich des Geräts eine Landefläche zur Verfügung steht. Um den Geräte-Akkumulator 320 von der Flugdrohne aus zu laden, können allgemein entweder im angedockten Zustand elektrische Kontakte ausgebildet werden, oder die Flugdrohne und das Gerät können alternativ zum kontaktlosen Laden ausgebildet sein.

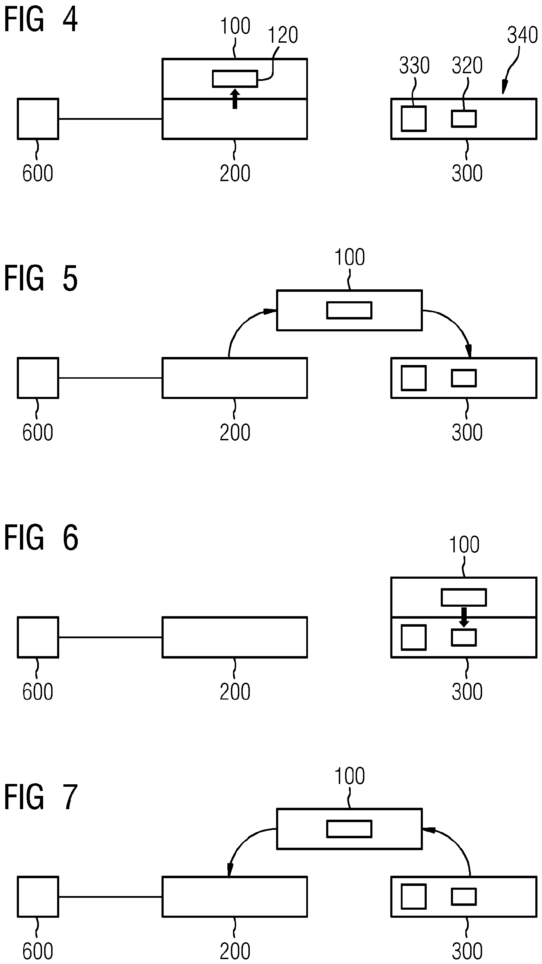

In den Figuren 4 bis 7 ist eine äußerst schematische Darstellung für einen beispielhaften Ablauf des erfindungsgemäßen Verfahrens gezeigt. So ist in Figur 4 ein Verfahrensstadium gezeigt, bei dem die nur schematisch angedeutete Drohne 100 auf einer Basisstation gelandet ist und gemäß Schritt a) von dieser aufgeladen wird. Dabei wird gemäß dem dicken Pfeil elektrische Energie von der Basisstation 200 auf den Drohnen-Akkumulator 120 übertragen. Diese Energie wird in diesem Beispiel aus einem übergeordneten Stromnetz 600 bereitgestellt, mit dem die Basisstation verbunden ist.

In Figur 5 ist der darauffolgende Schritt b) gezeigt, bei dem die Flugdrohne 100 bereits von der Basisstation 200 abgedockt hat und in Richtung des elektrischen Geräts 300 fliegt. Im Anschluss an diesen Flug wird die Flugdrohne an das elektrische Gerät andocken, so dass das in Figur 6 dargestellte Stadium erreicht wird. Im Unterschied zum Beispiel der Figur 3 ist hier die Flugdrohne aber nicht schwebend am Gerät angedockt, sondern die Flugdrohne landet beim Andocken auf einem Landebereich 340 des elektrischen Geräts. Das elektrische Gerät 300 umfasst einen Geräte-Akkumulator 320, in dem die vom Gerät benötigte elektrische Energie lokal gespeichert wird. Beim Verfahrensstadium der Figur 6 wird dieser Geräte-Akkumulator entsprechend Schritt c) von der Flugdrohne 100 aus geladen, wie durch den dicken Pfeil angedeutet. Vor, während und/oder nach diesem Ladeschritt kann die Flugdrohne auch dazu benutzt werden, das Gerät zu inspizieren. So kann beispielsweise ein optional in dem Gerät vorliegendes SensorElement 330 mittels der Flugdrohne getestet und/oder kalibriert werden. Das elektrische Gerät kann optional auch weitere, nicht näher dargestellte Teilelemente, insbesondere einen Mikroprozessor und/oder eine Kommunikationsschnittstelle umfassen. Insbesondere kann das elektrische Gerät ein IoT-Sensor sein.

In Figur 7 ist der nachfolgende Schritt d) gezeigt, bei dem die Flugdrohne 100 bereits vom elektrischen Gerät 300 abgedockt hat und wieder zurück in Richtung der Basisstation fliegt. Im Anschluss an diesen Flug wird also wieder das in Figur 4 dargestellte Stadium erreicht, wo sich der Kreis schließt: Die Flugdrohne kann hier ggf. gemäß Schritt a) erneut aufgeladen werden und auch die übrigen Schritte können bei Bedarf erneut durchlaufen werden.

### Bezugszeichenliste

- 1: System (Überwachungs-System)
- 100: Flugdrohne
- 110: Antriebsvorrichtung (Rotoren)
- 120: Drohnen-Akkumulator
- 130: Standfuß (Landegestell)
- 140: Kontaktelektrode (Federkontaktstift)
- 150: Drohnenkörper
- 160: Tragarm
- 170: Mikroprozessor
- 180: Kamera
- 181: Drohnen-Sensor
- 200: Basisstation
- 210: Landefläche
- 220: Elektrodenfläche (Feld der Landefläche)
- 230: Ladevorrichtung
- 250: Kofferschale
- 260: Akkumulator
- 270: Steuervorrichtung
- 280: Kamera
- 300: elektrisches Gerät (Sensor-Gerät)
- 320: Geräte-Akkumulator
- 330: Sensorelement
- 340: Landebereich
- 400: Innenraum
- 450: Industrieanlage
- 451: Fertigungsroboter
- 452: Förderanlage
- 500: Flugbahn
- P: Sollposition
- 600: Stromnetz
- x,y: horizontale Koordinaten
- z: vertikale Koordinate
- Z: Zentrum

## Patentansprüche

1. Verfahren zum Betrieb eines Systems (1),
- wobei das System (1) wenigstens ein elektrisches Gerät (300), wenigstens eine Basisstation (200) und wenigstens eine Flugdrohne (100) umfasst,
- wobei das elektrische Gerät (300) einen Geräte-Akkumulator (320) aufweist,
- wobei die Flugdrohne (100) einen Drohnen-Akkumulator (120) aufweist,
- wobei die Basisstation (200) eine Ladevorrichtung (230) aufweist
- und wobei das Verfahren die folgenden Schritte umfasst:
a) Laden des Drohnen-Akkumulators (120) mit der Ladevorrichtung der Basisstation (200),
b) Anfliegen des elektrischen Geräts (300) mit der Flugdrohne (100),
c) Laden des Geräte-Akkumulators (320) mit elektrischer Energie aus dem Drohnen-Akkumulator (120) der Flugdrohne und
d) Anfliegen der Basisstation (200) mit der Flugdrohne (100).

2. Verfahren nach Anspruch 1,
bei welchem alle Schritte a) bis d) autonom durchgeführt werden.

3. Verfahren nach einem der Ansprüche 1 oder 2, bei welchem die Flugdrohne (100) ein Fluggewicht unterhalb von 250 g aufweist.

4. Verfahren nach einem der vorhergehenden Ansprüche, bei welchem in Schritt c) eine elektrische Energiemenge von dem Drohnen-Akkumulator (120) auf den Geräte-Akkumulator (320) übertragen wird, die im Bereich 1 mAh und 50 mAh liegt.

5. Verfahren nach einem der vorhergehenden Ansprüche, bei welchem mehrere Teil-Ladeschritte cᵢ durchgeführt werden, wobei zwischen den einzelnen Teil-Ladeschritten cᵢ jeweils die Schritte d), a) und b) durchgeführt werden.

6. Verfahren nach einem der vorhergehenden Ansprüche, bei welchem Schritt b) folgende Teilschritte umfasst:
b1) Abdocken von der Basisstation (200) und
b2) Andocken am elektrischen Gerät (300) durch ein Landen der Flugdrohne (100) auf einem Landebereich (330) des elektrischen Geräts (300).

7. Verfahren nach einem der Ansprüche 1 bis 5, bei welchem Schritt b) folgende Teilschritte umfasst:
b1) Abdocken von der Basisstation (200) und
b2') schwebendes Andocken der Flugdrohne (100) am elektrischen Gerät (300).

8. Verfahren nach einem der Ansprüche 6 oder 7,
wobei beim Andocken der Flugdrohne (100) in Schritt b2) bzw. b2') elektrische Kontakte zwischen der Flugdrohne (100) und dem elektrischen Gerät (300) ausgebildet werden, durch welche das Laden in Schritt c) ermöglicht wird.

9. Verfahren nach einem der vorhergehenden Ansprüche,
wobei das Laden in Schritt c) kontaktlos erfolgt.

10. Verfahren nach einem der vorhergehenden Ansprüche,
bei welchem das wenigstens eine elektrische Gerät (300) ein Sensor-Gerät ist.

11. Verfahren nach Anspruch 10, bei welchem das System (1) ein Überwachungs-System ist, insbesondere zur Überwachung eines Innenraums (400).

12. Verfahren nach einem der vorhergehenden Ansprüche, bei welchem die Flugdrohne (100) wenigstens einen Drohnen-Sensor (180,181) aufweist,
wobei das Verfahren den folgenden zusätzlichen Schritt aufweist:
c1) Inspektion des elektrischen Geräts (300) mit dem Drohnen-Sensor (180,181).

13. Verfahren nach einem der vorhergehenden Ansprüche, bei welchem das System (1) mehrere elektrische Geräte (300) aufweist, welche in entsprechenden Schritten b) und c) von der Flugdrohne (100) angeflogen und geladen werden.

14. Verfahren nach einem der vorhergehenden Ansprüche, bei welchem das System (1) mehrere elektrische Geräte (300) aufweist, welche zusammen zumindest einen Teil eines Indoor Positioning Systems (IPS) ausbilden.

15. System (1) mit wenigstens einem elektrischen Gerät (300), wenigstens einer Basisstation (200) und wenigstens einer Flugdrohne (100),
- wobei das elektrische Gerät (300) einen Geräte-Akkumulator (320) aufweist,
- wobei die Flugdrohne (100) einen Drohnen-Akkumulator (120) aufweist,
- wobei die Basisstation (200) eine Ladevorrichtung (230) aufweist
- und wobei das System dazu ausgelegt ist mit einem Verfahren nach einem der Ansprüche 1 bis 14 betrieben zu werden.
